(19) Europäisches Patentamt
European Patent Office
Office européen des brevets

(11) EP 4 501 850 A1

(12) EUROPEAN PATENT APPLICATION
published in accordance with Art. 153(4) EPC

(43) Date of publication:
05.02.2025 Bulletin 2025/06

(21) Application number: 23780612.0

(22) Date of filing: 28.03.2023

(51) International Patent Classification (IPC):
$C01B\ 39/46^{(2006.01)}$ $\quad$ $B01D\ 53/04^{(2006.01)}$
$B01D\ 53/047^{(2006.01)}$ $\quad$ $B01D\ 53/26^{(2006.01)}$
$B01D\ 53/28^{(2006.01)}$ $\quad$ $B01J\ 20/18^{(2006.01)}$
$B01J\ 20/28^{(2006.01)}$ $\quad$ $B01J\ 20/34^{(2006.01)}$

(52) Cooperative Patent Classification (CPC):
B01D 53/04; B01D 53/047; B01D 53/26;
B01D 53/28; B01J 20/18; B01J 20/28; B01J 20/34;
C01B 39/46; Y02C 20/40

(86) International application number:
PCT/JP2023/012681

(87) International publication number:
WO 2023/190603 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.03.2022 JP 2022053929

(71) Applicant: Asahi Kasei Kabushiki Kaisha
Tokyo 1000006 (JP)

(72) Inventors:
• OHKUBO, Atsushi
Tokyo 100-0006 (JP)
• HANEDA, Tsuyoshi
Tokyo 100-0006 (JP)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **GIS-TYPE ZEOLITE, ZEOLITE MOLDED BODY, ADSORPTION DEVICE, AND PURIFIED GAS PRODUCTION METHOD**

(57) A GIS-type zeolite wherein a diffraction angle $(2\theta)$ is 28.60 to 29.54°, and the diffraction angle $(2\theta)$ of a diffraction peak $P_{CO2}$ having a strongest intensity among diffraction peaks observed between diffraction angles $2\theta$ of 25.81 to 34.57° in a spectrum obtained by X-ray diffraction under a dehydrated state and a carbon dioxide adsorption condition.

Figure 1

EP 4 501 850 A1

**Description**

Technical Field

The present invention relates to a GIS-type zeolite, a zeolite formed body, an adsorption system, and a method for producing a purified gas.

Background Art

Zeolite can be used for adsorbents, desiccants, separating agents, catalysts, catalyst carriers, detergent aids, ion exchangers, waste water treatment agents, fertilizers, food additives, cosmetic additives and the like, and, in particular, is useful in gas separation applications.

A zeolite having a GIS structure in codes for directing zeolite structures specified by the IZA (International Zeolite Association) is called a GIS-type zeolite. A GIS-type zeolite is a zeolite having a pore constituted by an oxygen 8-membered ring. Such a GIS-type zeolite is, for example, a GIS-type zeolite having adsorption ability of carbon dioxide, synthesized as shown in Patent Literature 1, in which the GIS-type zeolite is used for separation, recovery, and purification of carbon dioxide when used as an adsorbent.

Citation List

Patent Literatures

Patent Literature 1: International Publication No. WO2019/202933

Summary of Invention

Technical Problem

In a case where carbon dioxide is separated, recovered, or purified with an adsorbent, a pressure swing-type adsorption-separation method, a temperature swing-type adsorption-separation method, a pressure/temperature swing-type adsorption-separation method, or the like is used. Zeolite is packed in a column or the like and then used in such a method. Zeolite is shaped and then used as a pellet-like zeolite formed body in order not to cause any fine-powder-like zeolite to be accumulated in a flow path in an system and clog the flow path. Such a zeolite formed body is demanded to have, as performance, sufficient durability to use conditions. A problem has been found. When a zeolite formed body including a GIS-type zeolite, adsorbs a large amount of carbon dioxide, the formed body is embrittled. Such embrittlement, for example, causes a fine powder generated in an adsorption system, making continuous running of the system difficult due to pressure loss or the like.

Adsorbents are also demanded to have performances including no adsorption-desorption hysteresis of carbon dioxide. An adsorption-desorption hysteresis means a phenomenon in which a hysteresis in adsorption and desorption occurs in an adsorption-desorption isotherm of carbon dioxide, and it is demanded in use of an adsorbent that the amount of adsorption in adsorption and the amount of desorption in reproduction be large in a step of desorbing/reproducing carbon dioxide by heating and/or vacuuming. An adsorption-desorption hysteresis leads to a decrease in amount of adsorption in adsorption and accordingly a decrease in amount of desorption in reproduction, and thus is hardly said to be a desirable characteristic in use as an adsorbent. Patent Literature 1 shows a GIS-type zeolite in which a cation in the zeolite is substituted with any of Li, Na, K, Rb, and Cs, but an adsorption-desorption hysteresis is observed in an adsorption-desorption isotherm of carbon dioxide.

An object of the present invention is to provide a GIS-type zeolite which, when used as a formed body, is excellent in embrittlement resistance to adsorption of carbon dioxide and which can have a reduced adsorption-desorption hysteresis in an adsorption-desorption isotherm of carbon dioxide, a formed body including the GIS-type zeolite, an adsorbent including the same, and a method for producing a purified gas using the same.

Solution to Problem

The present inventors have made intensive studies in order to solve the above problems, and as a result, have found that, when a diffraction peak $P_{CO2}$ shown below is within a predetermined range or when the ratio $P_{CO2}/P_{de}$ of diffraction peaks shown below is within a predetermined range, embrittlement resistance to adsorption of carbon dioxide in use as a formed body is excellent and an adsorption-desorption hysteresis can be reduced in an adsorption-desorption isotherm of carbon dioxide, leading to completion of the present invention.

That is, the present invention includes the following embodiments.

<1> A GIS-type zeolite wherein a diffraction angle ($2\theta$) is 28.60 to 29.54°, and the diffraction angle is a diffraction angle ($2\theta$) of a diffraction peak $P_{CO2}$ having a strongest intensity among diffraction peaks observed between diffraction angles $2\theta$ of 25.81 to 34.57° in a spectrum obtained by X-ray diffraction under a dehydrated state and a carbon dioxide adsorption condition.

<2> A GIS-type zeolite wherein $P_{CO2}/P_{de} \geq 0.969$ is satisfied when a diffraction peak $P_{de}$ is set which has a strongest intensity observed between diffraction angles $2\theta$ of 25.81 to 34.57° in a spectrum obtained by X-ray diffraction under a dehydrated state and a nitrogen adsorption condition.

<3> The GIS-type zeolite according to <1>, wherein $P_{CO2}/P_{de} \geq 0.969$ is satisfied when a diffraction peak $P_{de}$ is a peak having a strongest intensity observed between diffraction angles $2\theta$ of 25.81 to 34.57° in a spectrum obtained by X-ray diffraction under a dehydrated state and a nitrogen adsorption condition.

<4> The GIS-type zeolite according to any of <1> to <3>, wherein the GIS-type zeolite has a silica/alumina ratio of 3.40 or more.

<5> The GIS-type zeolite according to any of <1> to <4>, including potassium or lithium as cationic species in the GIS-type zeolite.

<6> The GIS-type zeolite according to <5>, wherein a ratio (Z/T) of a total value (Z) of amount of substance of potassium and lithium to a total value (T) of amount of substance of alkali metals in the GIS-type zeolite is 0.05 or more.

<7> The GIS-type zeolite according to any of <1> to <6>, wherein (a + d)/(b + c) $\geq$ 0.192 is satisfied when area intensities of peaks assigned to Q4(3Al), Q4(2Al), Q4(1Al), and Q4(0Al) observed in a $^{29}$Si-MAS-NMR spectrum are respectively defined as a, b, c, and d.

<8> A zeolite formed body including the GIS-type zeolite according to any of <1> to <7>.

<9> The zeolite formed body according to <8>, including a carrier.

<10> The zeolite formed body according to <8> or <9>, wherein the carrier comprises an inorganic binder and an organic binder.

<11> The zeolite formed body according to any of <8> to <10>, wherein a total content of the carrier is 1 to 99% by mass based on a total amount of 100% by mass of the zeolite formed body.

<12> The zeolite formed body according to any of <8> to <11>, having a cylindrical shape.

<13> The zeolite formed body according to <12>, having a length of 3 mm or more and 30 mm or less and a diameter of 1 mm or more and 30 mm or less.

<14> An adsorption system comprising the zeolite formed body according to any of <8> to <13>.

<15> A method for producing a purified gas, comprising a separation step of separating one or more selected from the group consisting of $CO_2$, $H_2O$, He, Ne, $Cl_2$, $NH_3$, and HCl from a mixture including two or more gases selected from the group consisting of $H_2$, $N_2$, $O_2$, Ar, CO, and hydrocarbon, by use of the adsorption system according to <14>.

<16> The production method according to <15>, wherein the gas separation is performed by a pressure swing-type adsorption-separation method, a temperature swing-type adsorption-separation method, or a pressure/temperature swing-type adsorption-separation method in the separation step.

Advantageous Effects of Invention

The present invention can provide a GIS-type zeolite which, when used as a formed body, is excellent in embrittlement resistance to adsorption of carbon dioxide and which can have a reduced adsorption-desorption hysteresis in an adsorption-desorption isotherm of carbon dioxide, a formed body including the GIS-type zeolite, an adsorbent including the same, and a method for producing a purified gas using the same.

Brief Description of Drawings

[Figure 1] Figure 1 illustrates a diagram of an adsorption isotherm and a desorption isotherm of carbon dioxide of a GIS-type zeolite obtained in Comparative Example 1.
[Figure 2] Figure 2 is a view exemplifying an adsorbent according to one embodiment of the present invention.

Description of Embodiments

Hereinafter, an embodiment for carrying out the present invention (hereinafter, referred to as "the present embodiment".) will be described in detail. The present invention is not limited to the following description, and can be variously modified and carried out within the gist thereof. Herein, for example, the expression of a numerical value range of "1 to 100" encompasses both a lower limit value of "1" and an upper limit value of "100". The same also applies to the expression of any other numerical value range.

[GIS-type zeolite]

In a GIS-type zeolite of the present embodiment, the diffraction angle ($2\theta$) is 28.60 to 29.54°, and the diffraction angle ($2\theta$) of a diffraction peak $P_{CO2}$ having the strongest intensity among diffraction peaks observed between diffraction angles 20 of 25.81 to 34.57° in a spectrum obtained by X-ray diffraction under a dehydrated state and a carbon dioxide adsorption condition.

In the GIS-type zeolite of the present embodiment, $P_{CO2}/P_{de} \geq 0.969$ is satisfied when a diffraction peak $P_{de}$ is a peak having the strongest intensity observed between diffraction angles 20 of 25.81 to 34.57° in a spectrum obtained by X-ray diffraction under a dehydrated state and a nitrogen adsorption condition.

Any GIS-type zeolite described above, when used as a formed body, is excellent in embrittlement resistance to adsorption of carbon dioxide, and has a reduced adsorption-desorption hysteresis in an adsorption-desorption isotherm of carbon dioxide.

It is considered that a specific X-ray diffraction peak is associated with rigidity of a crystal affected by the binding modes of Si and Al present in a zeolite backbone and the diffraction peak can be subjected to predetermined control to suppress the change in structure in adsorption of carbon dioxide into zeolite. That is, it is considered that, according to the present embodiment, control of the binding modes of Si and Al can lead to control of rigidity of zeolite itself and a reduction in energy consumption generated depending on expansion/contraction can lead to a reduction in hysteresis, and also a reduction in maximum stress generated depending on expansion/contraction in use as an adsorbent. It is considered that such features provide a GIS-type zeolite having a reduced adsorption-desorption hysteresis in an adsorption-desorption isotherm of carbon dioxide and having embrittlement resistance to adsorption of carbon dioxide when used as a formed body.

The diffraction angle ($2\theta$) of $P_{CO2}$ is preferably 28.60 to 29.50°, more preferably 28.60 to 29.10°, further preferably 28.60 to 28.90°, from the viewpoint of an enhancement in embrittlement resistance to adsorption of carbon dioxide in use as a formed body and from the viewpoint of a reduction in adsorption-desorption hysteresis in an adsorption-desorption isotherm of carbon dioxide.

The $P_{CO2}/P_{de}$ is preferably 0.969 or more, more preferably 0.974 or more, further preferably 0.985 or more. The $P_{CO2}/P_{de}$, although the upper limit thereof is not particularly limited, may be 1.33 or less, may be 1.20 or less, or may be 1.01 or less.

The diffraction angles ($2\theta$) of $P_{CO2}$ and $P_{de}$ can be more specifically measured by a method described in Examples. The diffraction angles ($2\theta$) of $P_{CO2}$ and $P_{de}$ can be obtained by, for example, sequentially adding a silica source and controlling the initial nucleation in zeolite precursor synthesis in an aging step in a method for producing the GIS-type zeolite, described below.

The GIS-type zeolite according to the present embodiment is more hydrophilic and has a stronger adsorption force of a polar molecule such as carbon dioxide, as the silica/alumina ratio (which represents the molar ratio of silica and alumina, represented by $SiO_2/Al_2O_3$, and which is hereinafter also referred to as "SAR") is lower, but not particularly limited thereto. A higher SAR is more preferred because a lower SAR causes a so strong adsorption force that energy necessary for desorption by heating or vacuuming is larger. The SAR is preferably 3.40 or more, more preferably 4.40 or more, more preferably 4.50 or more, further preferably 4.69 or more, further preferably 4.90 or more, further preferably 5.40 or more, further preferably 6.01 or more. While the upper limit of the SAR is not particularly limited, a too high SAR leads to small interaction with an adsorbate and thus the SAR is preferably 3000 or less, more preferably 500 or less, further preferably 100 or less. The SAR of the zeolite in the zeolite formed body is determined by measurement of $^{29}$Si-MAS-NMR. The SAR can be more specifically measured by a method described in Examples described below. The SAR can be adjusted with, for example, the ratio between the amounts of water and OH- in a mixed gel.

While the SAR is preferably higher from the viewpoint of the energy necessary for desorption, it is confirmed that, when the SAR in the GIS-type zeolite is higher, an adsorption-desorption hysteresis in an adsorption-desorption isotherm of carbon dioxide is exhibited. In the GIS-type zeolite according to the present embodiment, the binding modes of Si and Al in the zeolite backbone can be controlled to eliminate an adsorption-desorption hysteresis in an adsorption-desorption isotherm of carbon dioxide. Specifically, when the area intensities of peaks assigned to Q4(3Al), Q4(2Al), Q4(1Al) and Q4(0Al) observed in a $^{29}$Si-MAS-NMR spectrum are respectively defined as a, b, c and d, and $(a + d)/(b + c) \geq 0.192$ is preferably satisfied, $0.913 \geq (a + d)/(b + c) \geq 0.195$ is more preferably satisfied, and $0.519 \geq (a + d)/(b + c) \geq 0.199$ is further preferably satisfied. The peaks including Q4(3Al), Q4(2Al), Q4(1Al) and Q4(0Al) observed in a $^{29}$Si-MAS-NMR spectrum represent the binding modes of Si and Al in the zeolite backbone, each of (a + d), (b + c), representing the sum of the area intensities, represents the sum of the amounts of presence of the binding modes, and (a + d)/(b + c) represents the abundance ratio. The abundance ratio of the binding modes of Si and Al has an influence on the change in structure of the zeolite backbone itself at each time of adsorption and desorption, and thus "(a + d)/(b + c)" as the abundance ratio of the binding modes of Si and Al in the zeolite backbone can be within an appropriate range to eliminate an adsorption-desorption hysteresis in an adsorption-desorption isotherm. The (a + d)/(b + c) can be measured by a method described in Examples described below. The (a + d)/(b + c) can be adjusted within a predetermined range by, for example, the ratio between the amount of alkali metal/alkaline earth metal and the amount of OH- in a mixed gel during synthesis.

The cationic species contained in the GIS-type zeolite is preferably potassium or lithium, more preferably potassium, from the viewpoint of an enhancement in selective adsorption ability of carbon dioxide. The total content of potassium and lithium in the zeolite is calculated as the ratio (Z/T) of the total value (Z) of the amount of substance of potassium and lithium to the total value (T) of the amount of substance of alkali metals in the GIS-type zeolite. The Z/T is preferably 0.05 or more, more preferably 0.10 or more, further preferably 0.15 or more. The upper limit of the Z/T is not particularly limited, and the Z/T may be 1.00 or less. The Z/T can be measured by thermally dissolving the zeolite in an aqueous sodium hydroxide solution or aqua regia, appropriately diluting the resultant to provide a liquid, and subjecting the liquid to ICP-emission spectrochemical analysis. The Z/T can be more specifically measured by a method described in Examples below. The Z/T can be adjusted by changing the proportions of potassium and lithium as cationic species of the GIS-type zeolite.

The ratio (K/T) of the total value (K) of the amount of substance of potassium to the total value (T) of the amount of substance of alkali metals in the GIS-type zeolite is preferably 0.05 or more, more preferably 0.10 or more, further preferably 0.15 or more. The upper limit of the K/T is not particularly limited and the K/T may be 1.00 or less.

The GIS-type zeolite preferably has an carbon dioxide adsorption capacity of 10 cm$^3$/g or more. The carbon dioxide adsorption capacity of the zeolite is preferably 20 cm$^3$/g or more, more preferably 40 cm$^3$/g or more, further preferably 50 cm$^3$/g or more. The carbon dioxide adsorption capacity of the zeolite, although the upper limit thereof is not particularly limited, is, for example, 100 cm$^3$/g or less. The carbon dioxide adsorption capacity is the volume (cm$^3$) of adsorption of carbon dioxide per gram of the zeolite at 25°C. The amount is more specifically measured by a method described in Examples.

The methane adsorption capacity into the GIS-type zeolite is preferably less than 10 cm$^3$/g. The methane adsorption capacity into the zeolite is more preferably 9 cm$^3$/g or less, further preferably 8 cm$^3$/g or less. The methane adsorption capacity is the volume (cm$^3$) of adsorption of methane per gram of the zeolite at 25°C. The amount is more specifically measured by a method described in Examples.

The selectivity represented by carbon dioxide adsorption capacity/methane adsorption capacity into the GIS-type zeolite is preferably 10 or more, more preferably 13 or more, further preferably 15 or more. The adsorption selectivity of the zeolite, although the upper limit thereof is not particularly limited, is, for example, 100 or less.

The content of the zeolite based on a total amount of 100% by mass of the zeolite formed body preferably may be 50% by mass or more, may be 60% by mass or more, may be 70% by mass or more, or may be 80% by mass or more. The content of the GIS-type zeolite based on a total amount of 100% by mass of the zeolite formed body may be 98% by mass or less, or may be 95% by mass or less.

(Synthesis method of GIS-type zeolite)

A method for producing the GIS-type zeolite according to the present embodiment can include, for example, a step of preparing a mixed gel containing a silica source including silicon, an aluminum source including aluminum, an alkali metal source/alkaline earth metal source including at least one selected from the group consisting of an alkali metal (M1) and an alkaline earth metal (M2), an alkali source, a phosphorus source including phosphorus, an organic structure-directing agent and water. Hereinafter, the mixed gel and each component included therein will be described.

[Mixed gel]

The mixed gel in the present embodiment is a mixture including a silica source, an aluminum source, an alkali metal source/alkaline earth metal source, and water as components, and including, if necessary, an alkali source, a phosphorus source, and an organic structure-directing agent.

The silica source refers to a component in the mixed gel, serving as a starting material of silicon included in a zeolite produced from the mixed gel, the aluminum source refers to a component in the mixed gel, serving as a starting material of aluminum included in a zeolite produced from the mixed gel, the alkali metal source/alkaline earth metal source refers to a component in the mixed gel, serving as starting material(s) of an alkali metal and/or an alkaline earth metal included in a zeolite produced from the mixed gel, the alkali source refers to a component for adjustment of alkalinity (pH) of the mixed gel, and the phosphorus source refers to a component in the mixed gel, serving as a starting material of phosphorus included in a zeolite produced from the mixed gel.

[Silica source]

The silica source is not particularly limited as long as it is one commonly used, and examples thereof include crystalline silica, amorphous silica, silicic acid, silicate and an organosilicate compound. More specific examples thereof include sodium silicate, potassium silicate, calcium silicate, magnesium silicate, fumed silica, precipitated silica, silica gel, colloidal silica, aluminosilicate, tetraethoxysilane (TEOS) and trimethylethoxysilane. These compounds may be used singly or in combinations of a plurality thereof. Here, aluminosilicate serves as the silica source and also serves as the aluminum source.

Among them, fumed silica, colloidal silica, or precipitated silica is preferable from the viewpoint that a zeolite high in the degree of crystallinity tends to be obtained.

[Aluminum source]

The aluminum source is not particularly limited as long as it is one commonly used, and specific examples thereof include, sodium aluminate, aluminum sulfate, aluminum nitrate, aluminum acetate, aluminum hydroxide, aluminum oxide, aluminum chloride, aluminum alkoxide, metallic aluminum and amorphous aluminosilicate gel. These compounds may be used singly or in combinations of a plurality thereof.

Among them, sodium aluminate, aluminum sulfate, aluminum nitrate, aluminum acetate, aluminum hydroxide, aluminum chloride or aluminum alkoxide is preferable from the viewpoint that a zeolite high in the degree of crystallinity tends to be obtained. From the same viewpoint, sodium aluminate or aluminum hydroxide is more preferable, and sodium aluminate is further preferable.

[Alkali metal source/alkaline earth metal source]

The types of the alkali metal/alkaline earth metal in the alkali metal source/alkaline earth metal source are not particularly limited, and any alkali metal compound and/or any alkaline earth metal compound can be used.

Examples of the alkali metal source/alkaline earth metal source include, but not limited to the following, hydroxide, hydrogencarbonate, carbonate, acetate, sulfate and nitrate of the alkali metal or the alkaline earth metal. These compounds may be used singly or in combinations of a plurality thereof.

The alkali metal and the alkaline earth metal used as the alkali source can be usually Li, Na, K, Rb, Cs, Ca, Mg, Sr, Ba, or the like. Na or K is preferable, and Na is more preferable from the viewpoint of more facilitating crystal formation of the GIS-type backbone. The alkali metal and the alkaline earth metal used as the alkali metal source/alkaline earth metal source may be used singly or in combinations of a plurality thereof.

Specific examples of the alkali source include, but not limited to the following,

sodium sulfate, sodium sulfite, sodium thiosulfate, sodium nitrite, sodium nitrate, sodium carbonate, sodium hydrogen carbonate, sodium phosphate, sodium acetate, sodium formate, sodium citrate, sodium oxalate, sodium fluoride, sodium chloride, sodium bromide, sodium iodide, thiosodium, sodium silicate, sodium metasilicate, sodium tetraborate, sodium chlorate, sodium perchlorate, sodium cyanide, sodium metastannate, sodium hexahydroxidostannate(IV), sodium hexacyanidoferrate(II), sodium permaganate, sodium chromate and sodium dichromate, potassium sulfate, potassium sulfite, potassium thiosulfate, potassium nitrite, potassium nitrate, potassium carbonate, potassium hydrogen carbonate, potassium phosphate, potassium acetate, potassium formate, potassium citrate, potassium oxalate, potassium fluoride, potassium chloride, potassium bromide, potassium iodide, thiopotassium, potassium silicate, potassium metasilicate, potassium tetraborate, potassium chlorate, potassium perchlorate, potassium cyanide, potassium metastannate, potassium hexahydroxidostannate(IV), potassium hexacyanidoferrate(II), potassium permaganate, potassium chromate and potassium dichromate, lithium sulfate, lithium sulfite, lithium thiosulfate, lithium nitrite, lithium nitrate, lithium carbonate, lithium hydrogen carbonate, lithium phosphate, lithium acetate, lithium formate, lithium citrate, lithium oxalate, lithium fluoride, lithium chloride, lithium bromide, lithium iodide, thiolithium, lithium silicate, lithium metasilicate, lithium tetraborate, lithium chlorate, lithium perchlorate, lithium cyanide, lithium metastannate, lithium hexahydroxidostannate(IV), lithium hexacyanidoferrate(II), lithium permaganate, lithium chromate and lithium dichromate, rubidium sulfate, rubidium sulfite, rubidium thiosulfate, rubidium nitrite, rubidium nitrate, rubidium carbonate, rubidium hydrogen carbonate, rubidium phosphate, rubidium acetate, rubidium formate, rubidium citrate, rubidium oxalate, rubidium fluoride, rubidium chloride, rubidium bromide, rubidium iodide, thiorubidium, rubidium silicate, rubidium metasilicate, rubidium tetraborate, rubidium chlorate, rubidium perchlorate, rubidium cyanide, rubidium metastannate, rubidium hexahydroxidostannate(IV), rubidium hexacyanidoferrate(II), rubidium permaganate, rubidium chromate and rubidium dichromate, cesium sulfate, cesium sulfite, cesium thiosulfate, cesium nitrite, cesium nitrate, cesium carbonate, cesium hydrogen carbonate, cesium phosphate, cesium acetate, cesium formate, cesium citrate, cesium oxalate, cesium fluoride, cesium chloride, cesium bromide, cesium iodide, thiocesium, cesium silicate, cesium metasilicate, cesium tetraborate, cesium chlorate, cesium perchlorate, cesium cyanide, cesium metastannate, cesium hexahydroxidostannate(IV), cesium hexacyanidoferrate(II), cesium permaganate, cesium chromate and cesium dichromate,

magnesium sulfate, magnesium sulfite, magnesium thiosulfate, magnesium nitrite, magnesium nitrate, magnesium carbonate, magnesium hydrogen carbonate, magnesium phosphate, magnesium acetate, magnesium formate, magnesium citrate, magnesium oxalate, magnesium fluoride, magnesium chloride, magnesium bromide, magnesium iodide, thiomagnesium, magnesium silicate, magnesium metasilicate, magnesium tetraborate, magnesium chlorate, magnesium perchlorate, magnesium cyanide, magnesium metastannate, magnesium hexahydroxidostannate(IV), magnesium hexacyanidoferrate(II), magnesium permaganate, magnesium chromate and magnesium dichromate,

calcium sulfate, calcium sulfite, calcium thiosulfate, calcium nitrite, calcium nitrate, calcium carbonate, calcium hydrogen carbonate, calcium phosphate, calcium acetate, calcium formate, calcium citrate, calcium oxalate, calcium fluoride, calcium chloride, calcium bromide, calcium iodide, thiocalcium, calcium silicate, calcium metasilicate, calcium tetraborate, calcium chlorate, calcium perchlorate, calcium cyanide, calcium metastannate, calcium hexahydroxidostannate(IV), calcium hexacyanidoferrate(II), calcium permaganate, calcium chromate and calcium dichromate,

strontium sulfate, strontium sulfite, strontium thiosulfate, strontium nitrite, strontium nitrate, strontium carbonate, strontium hydrogen carbonate, strontium phosphate, strontium acetate, strontium formate, strontium citrate, strontium oxalate, strontium fluoride, strontium chloride, strontium bromide, strontium iodide, thiostrontium, strontium silicate, strontium metasilicate, strontium tetraborate, strontium chlorate, strontium perchlorate, strontium cyanide, strontium metastannate, strontium hexahydroxidostannate(IV), strontium hexacyanidoferrate(II), strontium permaganate, strontium chromate and strontium dichromate,

barium sulfate, barium sulfite, barium thiosulfate, barium nitrite, barium nitrate, barium carbonate, barium hydrogen carbonate, barium phosphate, barium acetate, barium formate, barium citrate, barium oxalate, barium fluoride, barium chloride, barium bromide, barium iodide, thiobarium, barium silicate, barium metasilicate, barium tetraborate, barium chlorate, barium perchlorate, barium cyanide, barium metastannate, barium hexahydroxidostannate(IV), barium hexacyanidoferrate(II), barium permaganate, barium chromate and barium dichromate.

[Alkali source]

The alkali source is used for the purpose of adjusting the alkalinity (pH) in the mixed gel in order to promote crystallization to a zeolite structure in the case of zeolite production. The alkali used may be any compound exhibiting alkalinity, may be either an inorganic compound or an organic compound, and is preferably an inorganic compound in terms of cost, and more preferable examples thereof include alkali metal hydroxide. Examples of the alkali metal hydroxide include lithium hydroxide, sodium hydroxide, potassium hydroxide, rubidium hydroxide and cesium hydroxide, preferably include sodium hydroxide and potassium hydroxide, more preferably include sodium hydroxide. These compounds may be used singly or in combinations of a plurality thereof.

The phosphorus source is not particularly limited as long as it is one commonly used, and specific examples thereof include an aqueous phosphoric acid solution, sodium phosphate, aluminum phosphate, potassium phosphate, lithium phosphate, calcium phosphate and barium phosphate. These compounds may be used singly or in combinations of a plurality thereof.

Among them, an aqueous phosphoric acid solution, sodium phosphate or aluminum phosphate is preferable from the viewpoint that a zeolite high in the degree of crystallinity tends to be obtained. From the same viewpoint, an aqueous phosphoric acid solution or sodium phosphate is more preferable and an aqueous phosphoric acid solution is further preferable.

[Organic structure-directing agent]

The organic structure-directing agent in the case of zeolite production by hydrothermal synthesis of the mixed gel is a compound acting as promoting crystallization to a zeolite structure. In zeolite crystallization, the organic structure-directing agent can be, if necessary, used.

Any organic structure-directing agent may be adopted as the organic structure-directing agent without any limitation in terms of the type as long as it can form a desired GIS-type zeolite. The organic structure-directing agent may be used singly or in combinations of a plurality thereof.

As the organic structure-directing agent, without limitation to the following, for example, any of amines, quaternary ammonium salts, alcohols, ethers, amides, alkyl ureas, alkyl thioureas, cyanoalkanes, and alicyclic heterocyclic compounds including nitrogen as a hetero atom can be used, and alkylamines are preferably used and isopropylamine is more preferably used.

Such salts may have an anion. Representative examples of such an anion include, but not limited to the following, a halogen ion such as Cl-, Br- and I-, a hydroxide ion, an acetate ion, a sulfate ion, a nitrate ion, a carbonate ion, and a hydrogen carbonate ion. Among them, a halogen ion or a hydroxide ion is preferable and a halogen ion is more preferable from the viewpoint of more facilitating crystal formation of the GIS-type backbone.

[Compositional ratio of mixed-gel]

In the present embodiment, selection of the silica source is important for synthesis of a GIS-type zeolite having an appropriate structure. The dissolution behavior of the silica source in early stage of reaction has a large effect on the binding mode of Al in the zeolite backbone, and thus an appropriate silica source is needed to be selected depending on the composition of the mixed gel. The dissolution behavior of the silica source in early stage of reaction depends on the amount of the alkali metal/alkaline earth metal contained in the silica source itself, and the ratio between the amount of the alkali metal/alkaline earth metal and the amount of $SiO_2$ contained in the silica source itself is represented by the molar ratio of the sum of $L1_2O$ and $L2O$ to $SiO_2$, namely, $(L1_2O + L2O)/SiO_2$. (wherein L1 and L2 respectively represent the alkali metal and the alkaline earth metal contained in the silica source, and these are each calculated in terms of oxide.)

Even in the case of use of a plurality of such silica sources, the ratio between the molar amount of the sum of the alkali metal/alkaline earth metal and the molar amount of the sum of $SiO_2$ contained in such silica sources themselves may be considered. The ratio $(L1_2O + L2O)/SiO_2$ between the amount of the alkali metal/alkaline earth metal and the amount of $SiO_2$ contained in such silica sources themselves is preferably 0.30 or less, more preferably 0.25 or less, further preferably 0.08 or less from the viewpoint of selection of appropriate such silica sources and control of the dissolution behavior of such silica sources in early stage of reaction.

The ratio between the amount of the alkali metal/alkaline earth metal and the amount of OH- in the mixed gel is most important for synthesis of a GIS-type zeolite having an appropriate structure. The ratio between the amount of the alkali metal/alkaline earth metal and the amount of OH- in the mixed gel is represented by the molar ratio of OH- to the sum of $M1_2O$ and $M2O$, namely, $OH^-/(M1_2O + M2O)$. (wherein M1 represents the alkali metal and M2 represents the alkaline earth metal, and these are each calculated in terms of oxide.) "OH-" is OH- derived from an inorganic hydroxide such as NaOH or $Ca(OH)_2$, or an organic hydroxide such as tetraethylammonium hydroxide, and does not encompass one represented as an oxide such as sodium aluminate or sodium silicate, and OH- discharged in dissolution of the hydrate in water.

The zeolite is produced with the silica source and the aluminum source dissolved in a water solvent being dissolved and also reacted and thus crystallized, and the ratio between the amount of the alkali metal/alkaline earth metal and the amount of OH- in the mixed gel can be in an appropriate range to allow for control of the binding mode of Al in the zeolite backbone and allow for synthesis of a GIS-type zeolite having an ideal crystal structure. The ratio between the amount of the alkali metal/alkaline earth metal and the amount of OH-, $OH^-/(M1_2O + M2O)$, is preferably 0.20 or less, more preferably 0.16 or less, further preferably 0.10 or less from the viewpoint of formation of a crystal of an ideal GIS-type backbone.

The ratio between the silica source and the aluminum source in the mixed gel is represented as the molar ratio of the oxides of the corresponding elements, namely, $SiO_2/Al_2O_3$ (Herein, the ratio in the zeolite synthesized and the silica/alumina ratio in the mixed gel are not matched. The silica/alumina ratio in the zeolite synthesized is determined depending on other compositional and synthesis conditions.). The $SiO_2/Al_2O_3$ in the mixed gel is not particularly limited as long as zeolite can be formed, and is preferably 3.0 or more and 70.0 or less, more preferably 3.5 or more and 65.0 or less, further preferably 4.0 or more and 60.0 or less because formation of a zeolite having a backbone different from the GIS-type backbone can be suppressed.

A high ratio of water and alumina $(H_2O/Al_2O_3)$ tends to allow components in the mixed gel to be easily dispersed more uniformly, but a too high ratio thereof tends to cause the rate of crystallization to be extremely reduced. Accordingly, such tendencies have any effect on the equilibrium of crystallization and redissolution, and thus control of $H_2O/Al_2O_3$ is needed to be optimized in order to synthesize a GIS-type zeolite having an optimal crystal structure.

From the above viewpoint, $H_2O/Al_2O_3$ is preferably $210 \leq H_2O/Al_2O_3 \leq 780$, more preferably $220 \leq H_2O/Al_2O_3 \leq 778$, further preferably $230 \leq H_2O/Al_2O_3 \leq 775$.

The ratio between the phosphorus source and the aluminum source in the mixed gel is represented as the molar ratio of the oxides of the corresponding elements, namely, $P_2O_5/Al_2O_3$. The ratio $P_2O_5/Al_2O_3$ is not particularly limited as long as zeolite can be formed, and the ratio is preferably less than 1.0, more preferably 0.6 or less, further preferably 0.4 or less, particularly preferably 0 because formation of a zeolite having a backbone different from the GIS-type backbone tends to be able to be suppressed.

When the organic structure-directing agent is included in the mixed gel, the ratio between the aluminum source and the organic structure-directing agent is represented by the molar ratio of the organic structure-directing agent to $Al_2O_3$, namely, $R/Al_2O_3$ (wherein R represents the organic structure-directing agent). The ratio is preferably less than 7.0, more preferably 6.0 or less, further preferably 5.0 or less from the viewpoint of more facilitating crystal formation of the GIS-type backbone and/or decreasing the synthesis period to allow economic efficiency in zeolite production to be excellent. When the organic structure-directing agent is used, the zeolite organic structure-directing agent remains in a zeolite pore and carbon dioxide cannot enter into the pore, resulting in a decrease in amount of adsorption. While heating to at least 400°C or more is required in order to remove the organic structure-directing agent, a crystal of the GIS-type zeolite is collapsed at 350°C or more and thus is amorphous, and thus the amount of the organic structure-directing agent is preferably small. From this viewpoint, $R/Al_2O_3$ is preferably 4.0 or less, more preferably 3.5 or less, further preferably 3.0 or less.

As described above, the method for producing the GIS-type zeolite according to the present embodiment includes a step of preparing a mixed gel containing a silica source including silicon, an aluminum source including aluminum, an alkali metal/alkaline earth metal source, an alkali source, a phosphorus source, and water, wherein, when the molar ratios of components in the mixed gel are calculated in terms of oxides of corresponding elements with respect to the silicon, the aluminum, the alkali metal (M1) and the alkaline earth metal (M2), the alkali metal (L1) and the alkaline earth metal (L2) contained in the silica source, and the phosphorus source, the molar ratios $\alpha$, $\beta$, $\gamma$, $\delta$, and $\varepsilon$ represented by the following expressions (1), (2), (3), (4), (5) and (6) preferably satisfy $\alpha \leq 0.30$, $\beta \leq 0.20$, $3.0 \leq y \leq 70.0$, $210 \leq \delta \leq 780$, and $0 \leq \varepsilon <$ 1.0, more preferably satisfy $\alpha \leq 0.25$, $\beta \leq 0.16$, $3.5 \leq y \leq 65.0$, $220 \leq \delta$ 778, and $0 \leq \varepsilon$ 0.6, further preferably satisfy $\alpha \leq 0.08$, $\beta$ 0.10, 4.0 $y \leq 60.0$, $230 \leq \delta$ 775, and $0 \leq \varepsilon$ 0.4. The GIS-type zeolite according to the present embodiment is particularly preferably one obtained by the above method for producing the GIS-type zeolite of the present embodiment.

$$\alpha = (L1_2O + L2O)/SiO_2 \quad (1)$$

$$\beta = OH^-/(M1_2O + M2O) \quad (2)$$

$$\gamma = SiO_2/Al_2O_3 \quad (3)$$

$$\delta = H_2O/Al_2O_3 \quad (4)$$

$$\varepsilon = P_2O_5/Al_2O_3 \quad (5)$$

Furthermore, in the method for producing a GIS-type zeolite according to the present embodiment, preferably, the molar ratios $\alpha$, $\beta$, y, $\delta$, and $\varepsilon$ satisfy the above ranges, and when the mixed gel further includes an organic structure-directing agent R, the molar ratio $\xi$ represented by the following expression (6) preferably satisfies $\xi \leq 4$.

$$\xi = R/Al_2O_3 \quad (6)$$

Although a seed crystal is not necessarily needed to be present in the mixed gel, a GIS-type zeolite produced in advance can also be added as a seed crystal to the mixed gel, to provide the GIS-type zeolite of the present embodiment.

[Step of preparing mixed gel]

The step of preparing a mixed gel is not particularly limited, and may include, for example, a mixing step of mixing a silica source, an aluminum source, an alkali metal source/alkaline earth metal source, water, and, if necessary, an alkali source, a phosphorus source, and an organic structure-directing agent at one time or at multiple stages, and an aging step of the mixture obtained in the mixing step.

The mixing step can mix components including the silica source, the aluminum source, the alkali metal source/alkaline earth metal source, water, and, if necessary, the alkali source, the phosphorus source, and the organic structure-directing agent at one time or at multiple stages.

The order in mixing at multiple stages is not limited, and may be appropriately selected depending on conditions used. The mixing at multiple stages may be performed either with stirring or without stirring. In stirring, a stirring method commonly used is adopted without any particular limitation, and specific examples include methods using blade stirring, vibration stirring, oscillation stirring, and centrifugation stirring, and the like.

The rotational speed in stirring is not particularly limited as long as it is a stirring speed commonly used, and is, for example, 1 rpm or more and less than 2000 rpm.

The temperature in the mixing step is not particularly limited as long as it is a temperature commonly used, and is, for example, -20°C or more and less than 80°C.

The period for the mixing step is not particularly limited and can be appropriately selected depending on the temperature in the mixing step, and is, for example, more than 0 minutes and 1000 hours or less.

The aging step may be performed with either standing or stirring. In stirring in the aging step, a stirring method commonly used is adopted without any particular limitation, and specific examples include methods using blade stirring, vibration stirring, oscillation stirring, and centrifugation stirring.

The rotational speed in stirring is not particularly limited as long as it is a stirring speed commonly used, and is, for example, 1 rpm or more and less than 2000 rpm.

The temperature in the aging step is not particularly limited as long as it is a temperature commonly used, and is, for example, -20°C or more and less than 80°C.

The period for the aging step is not particularly limited, can be appropriately selected depending on the temperature in the aging step, and is, for example, more than 0 minutes and 1000 hours or less.

It is considered in zeolite production that dissolution of starting materials and production and redissolution of a zeolite precursor occur in the mixing step and the aging step of starting materials. It is important for synthesis of a GIS-type zeolite having an appropriate structure to sequentially add the silica source and control the initial nucleation in zeolite precursor synthesis, in the mixing step and the aging step. In the mixing step and the aging step, particularly important is the ratio of the molar amount S1 of the silica source present in the initial state where mixing of the mixed gel including the silica source, the aluminum source and water are initiated and the molar amount S2 of the silica source in the gel subjected to the hydrothermal synthesis step. The molar ratio, if designated as $\psi$, is represented by $\psi = S1/S2$. The $\psi$ can be within an appropriate range and the initial nucleation can be controlled, to adjust the binding modes of Si and Al in the zeolite backbone and the abundance ratio thereof and synthesize GIS having an ideal crystal structure. The $\psi$ is preferably 0.90 or less, more preferably 0.80 or less, further preferably 0.50 or less from the above viewpoints. The lower limit of the $\psi$ is not particularly limited, and the $\psi$ is preferably 0.05 or more, more preferably 0.08 or more, further preferably 0.10 or more because a too low $\psi$ causes an increase in generation of impurities such as an ANA-type zeolite and also sometime causes no production of GIS. Starting materials are preferably sufficiently mixed to provide a uniform starting material gel. The total period for the mixing step and the aging step combined may be appropriately adjusted based on the composition of starting materials, and the like in order to obtain a zeolite having a proper structure, and is not particularly limited. The period is typically preferably 1 minute or more and less than 24 hours, more preferably 3 minutes or more and less than 23 hours, further preferably 10 minutes or more and 18 hours or less, still further preferably 12 minutes or more and 15 hours or less, furthermore preferably 20 minutes or more and 6 hours or less.

[Hydrothermal synthesis step]

The method for producing a GIS-type zeolite according to the present embodiment preferably further includes a hydrothermal synthesis step where the hydrothermal synthesis temperature is 80°C to 200°C, and the hydrothermal synthesis temperature is more preferably 100°C to 180°C. That is, the mixed gel obtained in the preparation step is preferably subjected to hydrothermal synthesis with being kept at a predetermined temperature for a predetermined period with stirring or standing.

The temperature in the hydrothermal synthesis is not particularly limited as long as it is a temperature commonly used, and it is preferably 80°C or more from the viewpoint of decreasing the synthesis period to allow economic efficiency in zeolite production to be excellent. The temperature is more preferably 90°C or more, further preferably 100°C or more from the viewpoint that formation of a zeolite having a backbone different from the GIS-type backbone can be suppressed. The temperature is more preferably 200°C or less, further preferably 180°C or less, further preferably 170°C or less from the viewpoint that formation of a zeolite having a backbone different from the GIS-type backbone can be suppressed. The temperature in the hydrothermal synthesis may be constant or may be changed stepwisely.

The period for the hydrothermal synthesis is not particularly limited as long as it is a period commonly used, and can be appropriately selected depending on the temperature in the hydrothermal synthesis. The period for the hydrothermal synthesis is preferably 3 hours or more, more preferably 10 hours or more from the viewpoint that the GIS backbone is formed. The period is further preferably 24 hours or more from the viewpoint that a GIS-type zeolite high in crystallinity is obtained. The period for the hydrothermal synthesis is preferably 30 days or less, more preferably 20 days or less, further preferably 10 days or less from the viewpoint of allowing the economic efficiency in zeolite production to be excellent.

The container to which the mixed gel is loaded in the hydrothermal synthesis step is not particularly limited as long as it is a container commonly used, and when the pressure in the container is increased at a predetermined temperature or is gas pressure not inhibiting crystallization, the mixed gel is preferably loaded in a pressure-resistant container and subjected to the hydrothermal synthesis. The pressure-resistant container is not particularly limited, and a pressure-resistant container having any of various shapes such as spherical, longitudinally elongated, and horizontally elongated shapes can be used.

When the mixed gel in the pressure-resistant container is stirred, the pressure-resistant container is rotated vertically and/or laterally, preferably rotated vertically. When the pressure-resistant container is rotated vertically, the rotational speed is not particularly limited as long as it is within a range commonly used, and it is preferably 1 to 50 rpm, more preferably 10 to 40 rpm.

In the hydrothermal synthesis step, examples of preferable stirring of the mixed gel include a method including using a pressure-resistant container having a longitudinally elongated shape and vertically rotating it.

[Separation/drying step]

After the hydrothermal synthesis step, the solid as the product and the liquid including water are separated, and the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried. The temperature at which the resultant from separation is dried is not particularly limited as long as it is a common drying temperature, and it is usually from room temperature to 150°C or less. The atmosphere during drying is not particularly limited as long as it is an atmosphere commonly used, and an air atmosphere, or an atmosphere to which an inert gas such as nitrogen or argon, or oxygen is added is usually used.

[Calcining step]

A GIS-type zeolite, if necessary, calcined can be used. The calcining temperature is not particularly limited as long as it is a temperature commonly used, and it is preferably 300°C or more, more preferably 350°C or more from the viewpoint that, when the organic structure-directing agent is desired to be removed, the proportion thereof remaining can be decreased. The temperature is further preferably 360°C or more from the viewpoint that the calcining period is decreased to allow the economic efficiency in zeolite production to be excellent. The temperature is preferably less than 450°C, more preferably 420°C or less, further preferably 400°C or less because crystallinity of zeolite tends to be retained.

The calcining period is not particularly limited as long as it is a period where the organic structure-directing agent is sufficiently removed, and it can be appropriately selected depending on the calcining temperature and is preferably 0.5 hours or more, more preferably 1 hour or more, further preferably 3 hours or more because the proportion of the remaining organic structure-directing agent tends to be able to be decreased. The calcining period is preferably 10 days or less, more preferably 7 days or less, further preferably 5 days or less because crystallinity of zeolite tends to be retained.

The calcining atmosphere is not particularly limited as long as it is an atmosphere commonly used, and an air atmosphere, or an atmosphere to which an inert gas such as nitrogen or argon, or oxygen is added is usually used.

[Cation exchange]

The GIS-type zeolite can be, if necessary, subjected to cation exchange to a desired cation type. In such cation exchange, without limitation to the following, for example, carbonate such as sodium carbonate, potassium carbonate, lithium carbonate, rubidium carbonate, cesium carbonate, magnesium carbonate, calcium carbonate, strontium carbonate, barium carbonate or ammonium carbonate, or nitrate such as sodium nitrate, potassium nitrate, lithium nitrate, rubidium nitrate, cesium nitrate, magnesium nitrate, calcium nitrate, strontium nitrate, barium nitrate or ammonium nitrate, or a salt where a carbonate ion or a nitrate ion included in the carbonate or the nitrate is changed to a halide ion, a sulfate ion, a carbonate ion, a hydrogen carbonate ion, an acetate ion, a phosphate ion or a hydrogen phosphate ion, or an acid such as nitric acid or hydrochloric acid can be used. It is preferable to include a potassium atom as cationic species in the zeolite from the viewpoint of allowing the selective adsorption ability of carbon dioxide to be enhanced.

The cation exchange temperature is not particularly limited as long as it is a common cation exchange temperature, and it is usually from room temperature to 100°C or less.

In separation of zeolite after such cation exchange, the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried.

The temperature at which the resultant from separation is dried is not particularly limited as long as it is a common drying temperature, and it is usually from room temperature to 150°C or less.

The atmosphere during drying is not particularly limited as long as it is an atmosphere commonly used, and an air atmosphere, or an atmosphere to which an inert gas such as nitrogen or argon, or oxygen is added is usually used.

[Zeolite formed body]

A zeolite formed body according to the present embodiment includes the above GIS-type zeolite.

The content of the GIS-type zeolite based on a total amount of 100% by mass of the zeolite formed body preferably may be 50% by mass or more, may be 60% by mass or more, may be 70% by mass or more, or may be 80% by mass or more. The content of the GIS-type zeolite based on a total amount of 100% by mass of the zeolite formed body may be 99% by mass or less, may be 95% by mass or less, or may be 92% by mass or less.

[Carrier]

The zeolite formed body according to the present embodiment preferably includes a carrier. Examples of the carrier include an inorganic binder and an organic binder.

Examples of the inorganic binder include inorganic oxides such as alumina, silica, magnesia, zirconia and titania, clay minerals such as bentonite and kaolin, calcium silicate, and calcium aluminate. Examples of the alumina include $\alpha$-alumina, $\gamma$-alumina, boehmite, pseudo boehmite, bayerite, gibbsite, and diaspore. Examples of the silica include colloidal silica, water glass, fumed silica, silica sol, wet-process silica, dry-process silica, and natural silica. These inorganic binders may be used singly or in combinations of a plurality thereof. Among these inorganic binders, alumina, silica, magnesia, zirconia, and titania are preferable, and silica and alumina are more preferable from the viewpoint of an enhancement in strength of the zeolite formed body.

The content of the inorganic binder based on a total amount of 100% by mass of the zeolite formed body is preferably 1 to 90% by mass, more preferably 1 to 50% by mass, further preferably 5 to 40% by mass, still further preferably 8 to 30% by mass.

Examples of the organic binder include cellulose, methyl cellulose, carboxymethyl cellulose, hydroxyethyl cellulose, latex, polyvinyl alcohol, vinyl acetate, polyvinyl acetal, vinyl chloride, acrylic, polyamide, urea, melamine, a phenol resin, polyester, polyurethane, polyamide, polybenzimidazole, chloroprene rubber, nitrile rubber, styrene-butadiene rubber, polysulfide, butyl rubber, silicone rubber, acrylic rubber, and urethane rubber. These organic binders may be used singly or in combinations of a plurality thereof. Among these organic binders, cellulose, methyl cellulose, carboxymethyl cellulose, hydroxyethyl cellulose, and polyvinyl alcohol are preferable, and cellulose, methyl cellulose, and polyvinyl alcohol are more preferable, from the viewpoint of surface binding with the GIS-type zeolite.

The content of the organic binder based on a total amount of 100% by mass of the GIS-type zeolite formed body is preferably 1 to 90% by mass, more preferably 1 to 50% by mass, further preferably 5 to 40% by mass, still further preferably 8 to 30% by mass.

The carrier preferably includes the inorganic binder and the organic binder. In other words, the carrier preferably includes one or more of the above inorganic binders and one or more of the organic binders.

The total content of the carrier based on a total amount of 100% by mass of the zeolite formed body is preferably 1 to 90% by mass, more preferably 1 to 50% by mass, further preferably 5 to 40% by mass, still further preferably 8 to 30% by mass. When the content of the carrier is higher, the formed body tends to be higher in strength, but the content of the zeolite itself tends to be lower. Therefore, the content of the carrier may be adjusted in consideration of the strength and performance demanded depending on the intended use.

The shape of the zeolite formed body is not particularly limited, and examples thereof include spherical, cylindrical, elliptic, bale-type, trefoil-type, ring, and powdery shapes. Among them, spherical and cylindrical shapes are further preferable. The size of the formed body is not particularly limited, and is changed depending on the state of use of the formed body. For example, in the case of use of a process in which the formed body is used in any other state than a flow state, such as a fixed bed or a mobile bed, a cylindrical form having a length of 3 mm or more and 30 mm or less and a diameter of 1 mm or more and 30 mm or less is preferable. The length of such a cylinder is more preferably 3 mm or more and 10 mm or less, further preferably 3 mm or more and 8 mm or less. The diameter of such a cylinder is more preferably 2 mm or more and 4 mm or less.

The length and the diameter can be determined by subjecting three samples to measurement of the length and the diameter of a pellet by a caliper method with a caliper having a minimum read value of 0.1 mm or less, to provide the respective average values as the length and the diameter, and can be adjusted within the above range by, for example, an operation such as classification.

In the case of use of a process in which the formed body is allowed to flow and then used, such as a fluid bed, a particle having a particle size of 20 $\mu$m or more and 300 $\mu$m or less is preferable. The particle size is more preferably 20 $\mu$m or more and 200 $\mu$m or less, further preferably 30 $\mu$m or more and 100 $\mu$m or less. The particle size can be measured as a median size (D50) with a laser diffraction/scattering type particle size analyzer (MT3000 manufactured by Microtrac), according to the attached manual.

The compressive strength of the zeolite formed body according to the present embodiment is preferably 1.0 MPa or more, more preferably 2.2 MPa or more, further preferably 3.4 MPa or more. In particular, in a case where the zeolite formed body according to the present embodiment is powdery, the above range is preferably satisfied.

The compressive strength can be determined as the average value of the values obtained in measurement twenty times with a micro compression testing machine (MCT-W500 manufactured by Shimadzu Corporation, compressive strength measurement), and can be adjusted within the above range by, for example, the calcining temperature and/or the calcining time.

The fracture strength of the zeolite formed body according to the present embodiment is preferably 5 N or more, more preferably 10 N or more, further preferably 20 N or more. In particular, in a case where the zeolite formed body according to the present embodiment is a pellet, the above range is preferably satisfied.

The fracture strength can be determined as the average value of the respective values obtained in measurement twenty times with a digital hardness meter (KHT-40N manufactured by Fujiwara Scientific Co., Ltd., indenter 3 mm, fracture strength measurement), and can be adjusted within the above range by, for example, the calcining temperature and/or the calcining time.

[Method for producing zeolite formed body]

A method for producing a zeolite formed body according to the present embodiment may include, without particular limitations, a starting material mixing step (X) of mixing the GIS-type zeolite according to the present embodiment, and any other component (for example, carrier), to perform preparation, a molding treatment step (Y) of subjecting the prepared starting material to molding treatment to thereby obtain a precursor, and a calcining step (Z) of calcining the precursor, to provide a zeolite formed body.

In a case where a desired zeolite formed body is obtained in the method for producing a zeolite formed body, molding may be made by other method, for example, extrusion treatment, injection treatment, injection/casting treatment, tumbling granulation treatment, compression molding treatment, spray drying treatment, or a method in which two or more of these methods are combined.

[Starting material mixing step (X)]

The starting material used in the starting material mixing step (X) may be used in a state adapted to a production method, such as a powder, solvent dispersion, sol, or liquid state. In a case where, for example, the inorganic binder is used as such a starting material used, the inorganic binder is used in a state adapted to a production method, such as a powder, solvent dispersion, sol, or liquid state, preferably used in a powder or sol state from the viewpoint of ease of handling. Such an inorganic binder may be used singly or in combinations of a plurality thereof. The temperature at which the starting material is mixed is not particularly limited, and is, for example, preferably 10°C to 80°C, more preferably 15°C to 60°C. For example, when the state after starting material mixing is a slurry state as in spray drying treatment, water in the starting material tends to be able to be inhibited from being evaporated at a temperature of the starting material of 80°C or less, and such slurry tends to be able to be inhibited from being frozen at a temperature of the starting material of 10°C or more. For example, when a clay state in a funicular to capillary state is achieved after starting material mixing as in extrusion treatment, moisture tends to be inhibited from being evaporated from the clay to allow the amount of moisture in the clay to be kept constant at a temperature of the starting material of 80°C or less, and moisture in the clay tends to be able to be inhibited from being frozen at a temperature of the starting material of 10°C or more.

The mixing tool adopted in preparation of the starting material can be any tool. For example, when the state after starting material mixing is a slurry state as in spray drying treatment, a stirring blade is preferably listed. Specific examples of the blade used in stirring include propeller-shaped, paddle-shaped, flat paddle-shaped, turbine-shaped, and cone-shaped blades. A baffle plate or the like may be disposed in a tank in order to perform efficient stirring. The optimal condition of the number of stirring machines may be selected depending on the size of a catalyst starting material liquid tank, the shape of the stirring blade, and the like. In the present embodiment, the total mixing time of the starting material is preferably 1 minute to 24 hours, more preferably 10 minutes to 5 hours, further preferably 15 minutes to 3 hours. In a case where the mixing time of the mixed liquid is 1 minute or more, the starting material tends to be easily uniform in composition, and in a case where the mixing time is 24 hours or less, the influence of moisture evaporation in the starting material tends to be smaller. For example, in a case where a clay state in a funicular to capillary state is achieved after starting material mixing as in extrusion treatment, a mixing machine, a kneading machine, or the like is preferably selected depending on the state of the starting material. In the present embodiment, the total mixing or kneading time of the starting material is preferably 1 minute to 24 hours, more preferably 2 minutes to 5 hours, further preferably 3 minutes to 3 hours. In a case where the mixing time of the mixed liquid is 1 minute or more, the starting material tends to be easily uniform in composition, and in a case where the mixing time is 24 hours or less, the influence of moisture evaporation in the starting material tends to be smaller. In a case where an organic binder to be easily gelled by heat, such as methyl cellulose, is compounded, the internal temperature of a mixing machine, a kneading machine, or the like can be kept at a value less than the thermal gelling temperature of the organic binder, thereby allowing for suppression of gelling of the organic binder and resulting in a tendency to provide a starting material having a uniform composition.

Furthermore, the starting material, which is in a clay state, can also be left to still stand and aged. Such aging not only tends to allow moisture to be easily spread between starting material zeolites, easily resulting in an enhancement in moldability, but also tends to lead to exchange with a gas present between zeolites, such as air, thereby providing a more densified formed body.

[Molding treatment step (Y)]

Examples of the molding treatment in the molding treatment step (Y) include extrusion treatment, compression molding treatment, and spray drying treatment.

The extrusion treatment is not particularly limited, and the temperature in extrusion is, for example, preferably 10°C to 80°C, more preferably 15°C to 75°C depending on properties of a starting material used (also referred to as "starting material clay" in the extrusion treatment.). The amount of moisture in the starting material clay is preferably 35% by mass to 50% by mass, more preferably 38% by mass to 45% by mass. In a case where the amount of moisture is 50% by mass or less, the starting material clay can be prevented from being excessively enhanced in flexibility, resulting in a tendency to enhance moldability, and in a case where the amount of moisture is 35% by mass or more, the starting material clay can be prevented from being properly reduced in flexibility, resulting in a tendency to enhance moldability.

In a case where the extrusion treatment is used as the molding treatment step (Y), the extruder is not particularly limited, and examples thereof include screw-type, roll-type, blade-type, self-molding-type, ram-type, and disc pelletizer-type extruders. Among them, in particular, a roll-type, screw-type, or disc pelletizer-type extruder is preferably used to carry out the extrusion treatment.

In a case where the compression molding treatment is used as the molding treatment step (Y), the compression molding machine is not particularly limited, and examples thereof include uniaxial press molding and hot press molding machines.

In the spray drying treatment, for example, slurry atomization can be performed by any method with a rotating disc system, a two-fluid nozzle system, a highpressure nozzle system, and the like, usually industrially carried out, and in particular, is preferably performed with a rotating disc system. The drying heat source used in drying of droplets sprayed is preferably air heated by steam, an electric heater, or the like. The temperature at an inlet of a drying machine can be about 100°C to 400°C and is preferably 150°C to 300°C. The temperature at an outlet of a drying machine can be about 40°C to 150°C and is preferably 50°C to 130°C.

[Calcining step (Z)]

The calcining temperature in the calcining step (Z) is not particularly limited as long as it is a temperature commonly used, and the calcining temperature is preferably less than 550°C, more preferably 530°C or less, further preferably 500°C or less because the zeolite tends to be able to not only retain crystallinity, but also ensure strength. The calcining temperature is preferably 110°C or more, more preferably 120°C or more.

The calcining time in the calcining step (Z) is not particularly limited and can be appropriately selected depending on the calcining temperature as long as the carrier is sufficiently dried and sintered, and the time is preferably 20 days or less, more preferably 10 days or less, further preferably 7 days or less because the zeolite tends to be able to not only retain crystallinity, but also ensure strength.

The calcining atmosphere in the calcining step (Y) is not particularly limited as long as it is an atmosphere commonly used, and air atmosphere, or an atmosphere to which an inert gas such as nitrogen or argon, or oxygen is added is usually used.

The calcining in the calcining step (Z) can be performed with a calcining furnace such as a rotary furnace, a tunnel furnace, or a muffle furnace.

The GIS-type zeolite according to the present embodiment is not particularly limited in the application thereof, and can be used for, for example, separating agents or separation membranes for various gases and liquids, electrolyte membranes for fuel cells and the like, fillers of various resin formed bodies, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Among the above, the GIS-type zeolite according to the present embodiment can be suitably used as a carbon dioxide adsorbent.

[Adsorption system]

An adsorption system according to the present embodiment includes the zeolite formed body according to the present embodiment. The adsorption system according to the present embodiment is thus configured, and thus can sufficiently adsorb carbon dioxide and is also high in selectivity of adsorption of carbon dioxide relative to the methane adsorption capacity. Therefore, the adsorbent can be particularly preferably used for the purpose of, for example, selective removal of carbon dioxide from natural gas.

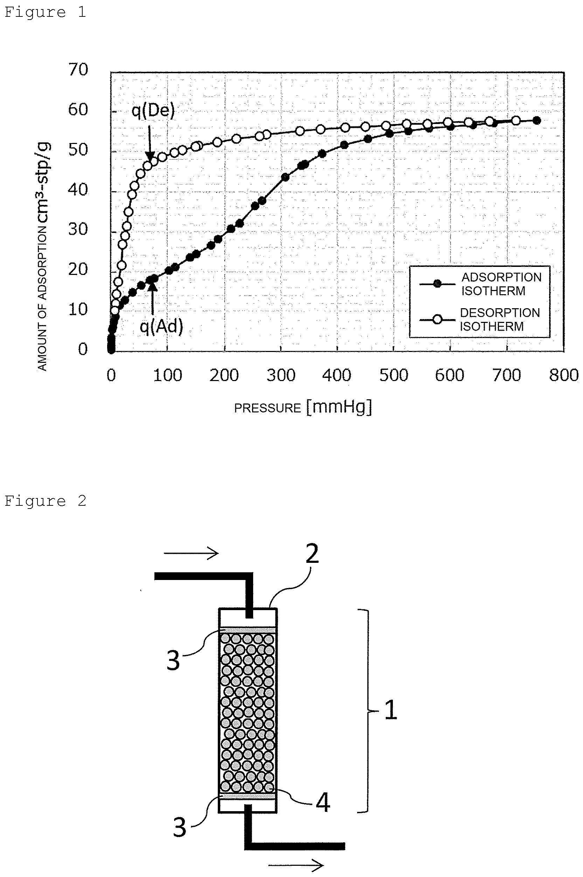

The adsorption system according to the present embodiment includes the zeolite formed body including the GIS-type zeolite according to the present embodiment, and may correspond to a configuration example illustrated in Figure 2. An adsorption system 1 according to the present embodiment, illustrated in Figure 2, includes, in a container 2, a filter 3 disposed at each of two positions closer to the inlet and the outlet and a plurality of zeolite formed bodies 4 packed between such two filters 3. For example, a filter formed from quartz can be used for the filter 3. For example, when the adsorption system 1 is used for separation of carbon dioxide from natural gas, the natural gas can be introduced through an upper line and impurities can be removed therefrom by the filter 3, thereafter carbon dioxide is selectively adsorbed and removed by the zeolite formed body 4, and a methane-rich gas can be taken out through a lower line. Herein, an object to be subjected to the adsorption system is not limited to natural gas, and the inner structure of the adsorption system is also not limited to the example illustrated in Figure 2.

[Method for producing purified gas]

The method for producing a purified gas according to the present embodiment is to separate one or more selected from the group consisting of $CO_2$, $H_2O$, He, Ne, $Cl_2$, $NH_3$, and HCl from mixture including two or more gases selected from the group consisting of $H_2$, $N_2$, $O_2$, CO, and hydrocarbon, by use of an adsorption system including the GIS-type zeolite according to the present embodiment. In the present embodiment, it is preferable to separate one or more selected from the group consisting of $CO_2$ and $H_2O$ from one or more gases selected from the group consisting of $N_2$, $O_2$, CO, and hydrocarbon. Herein, the hydrocarbon is not particularly limited, and examples thereof include methane, ethane, ethylene, propane, propylene, 1-butene, 2-butene, 2-methylpropene, dimethyl ether, and acetylene.

The GIS-type zeolite according to the present embodiment is high in volume of adsorption of $CO_2$, and physical adsorption through no chemical bond is observed. Such a separation method using the GIS-type zeolite according to the present embodiment is not particularly limited, and is preferably a method low in energy in reproduction of an adsorbent and excellent in economic performance. A specific example of such a method here used is, but not particularly limited, preferably any of a pressure swing-type adsorption-separation method, a temperature swing-type adsorption-separation method, or a pressure/temperature swing-type adsorption-separation method. A pressure swing-type adsorption-separation method (PSA: Pressure Swing Adsorption) is a method where gas separation is performed by decreasing the pressure in gas desorption so that the pressure is lower than that in gas adsorption and utilizing the difference between the amount of adsorption at a high pressure and the amount of adsorption at a low pressure. A temperature swing-type adsorption-separation method (TSA: Thermal Swing Adsorption) is a method where gas separation is performed by increasing the temperature in gas desorption so that the temperature is higher than that in gas adsorption and utilizing the difference between the amount of adsorption at a low temperature and the amount of adsorption at a high temperature. A combined method of such methods is a pressure/temperature swing-type adsorption desorption method (PTSA: Pressure and Therml Swing Adsorption). Such methods can be performed in various known conditions.

Examples

Hereinafter, the present embodiment will be described with reference to Examples and the like in more detail, but such Examples are illustrative, and the present embodiment is not intended to be limited to the following Examples.

[X-ray diffraction; crystal structure analysis ($P_{CO2}$, $P_{de}$)]

X-ray diffraction was performed according to the following procedure.

(1) A zeolite formed body (dried product after treatment at 350°C for 24 hours) obtained in each of Examples and Comparative Examples was used as a sample, and pulverized by an agate mortar. A mixed product was used as a structure analysis sample, the product being obtained by further adding 10% by mass of crystalline silicon (produced by Rare Metallic Co., Ltd.) to the zeolite formed body (dried product) and mixing the resultant by an agate mortar until a homogeneous system was obtained.

(2) The sample of (1) above, placed in a quartz capillary (0.5 mmφ), was attached to a sample holder where a $N_2$ bomb, a $CO_2$ bomb, a vacuum pump, a manometer and a sample holder were joined by a gas pipe, and then attached to an X-ray diffraction system, and measurement was performed in the following conditions.

X-ray diffraction system (XRD): powder X-ray diffraction system "Ultima-IV" (trade name) manufactured by Rigaku Corporation

Measurement method: transmission method
X-ray source: Cu tube (40 kV, 40 mA)
Measurement range: 5 to 90° (0.02°/step)
Measurement speed: 0.5°/min
Slit width (scattering, diffusion, light reception): open, 1°

(3) The diffraction peak $P_{de}$ by X-ray diffraction under a dehydrated state and a nitrogen adsorption condition was measured by the following procedure.

The temperature was calibrated by use of a thermocouple with direct blowing of a nitrogen gas heated by a heater to the capillary with the sample placed therein, and was thus 350°C. The pressure in the sample holder was reduced to 1.0 mmHg by the vacuum pump. The temperature and the degree of pressure reduction were retained for 3 hours, $N_2$ was then introduced into the sample holder by the $N_2$ bomb, the temperature was decreased to 25°C, and measurement of X-ray diffraction was then performed. The diffraction peak having the strongest intensity observed between diffraction angles $2\theta$ of 25.81 to 34.57° in the resulting spectrum was defined as $P_{de}$.

(4) The diffraction peak $P_{CO2}$ by X-ray diffraction under a dehydrated state and a carbon dioxide adsorption condition was determined according to the following procedure.

The temperature was calibrated by use of a thermocouple with direct blowing of a nitrogen gas heated by a heater to the capillary with the sample placed therein, and was thus 350°C. Furthermore, the pressure in the sample holder was reduced to 1.0 mmHg by the vacuum pump. The temperature and the degree of pressure reduction were retained for 3 hours, $N_2$ was then introduced into the sample holder by the $N_2$ bomb, and the temperature was decreased to 25°C. The pressure in the sample holder was again reduced to 1.0 mmHg by the vacuum pump, $CO_2$ was then introduced into the sample holder by the $CO_2$ bomb, the pressure in the sample holder was 300 kPa, and measurement of X-ray diffraction was performed. The diffraction angle ($2\theta$) of the diffraction peak having the strongest intensity in the resulting spectrum was defined as $P_{CO2}$.

[Measurements of $^{29}$Si-MAS-NMR spectrum and SAR]

The SAR of the zeolite in the zeolite formed body can be determined by measurement of $^{29}$Si-MAS-NMR. First, water was put on the bottom of a desiccator, for humidity conditioning of a zeolite, and a zeolite placed in a sample tube was retained thereon for 48 hours. After humidity conditioning treatment, $^{29}$Si-MAS-NMR measurement was performed under the following conditions.

System: JEOL RESONANCE ECA700
Magnetic field intensity: 16.44 T ($^1$H resonant frequency 700 MHz)
Measurement nucleus: $^{29}$Si
Resonant frequency: 139.08 MHz
NMR tube: 4 mm$\varphi$ (rotor made of zirconia)
Measurement method: DD/MAS (dipolar decoupling magic angle spinning)
Pulse width: 45°
Waiting time: 50 sec
Cumulated number: 800 (measurement time; about 22 hours)
MAS: 10,000 Hz
Chemical shift reference: silicone rubber (-22.34 ppm), external reference

A formed body including a GIS-type zeolite shows the following five peaks in a $^{29}$Si-MAS-NMR spectrum.

(1) Q4(0Al): peak assigned to Si not bound with any Al via oxygen
(2) Q4(1Al): peak assigned to Si bound with one Al atom via oxygen
(3) Q4(2Al): peak assigned to Si bound with two Al atoms via oxygen
(4) Q4(3Al): peak assigned to Si bound with three Al atoms via oxygen
(5) Q4(4Al): peak assigned to Si bound with four Al atoms via oxygen

The peak positions in a $^{29}$Si-MAS-NMR spectrum are generally present at -112 ppm to -80 ppm, and can be assigned to Q4(0Al), Q4(1A1), Q4(2Al), Q4(3Al), or Q4(4Al) from the high magnetic field side. While the peak positions can be changed depending on cationic species present in the zeolite backbone, the peak positions are generally present in the following ranges.

(1) Q4(0Al): -105 ppm to -112 ppm
(2) Q4(1Al): -100 ppm to -105 ppm
(3) Q4(2Al): -95 ppm to -100 ppm
(4) Q4(3Al): -87 ppm to -95 ppm
(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method. When the areas of the respective peaks of Q4(0Al), Q4(1Al), Q4(2Al), Q4(3Al), and Q4(4Al) are defined as A_Q4(0Al), A_Q4(1Al), A_Q4(2Al), A_Q4(3Al), and A_Q4(4Al), and the total value of A_Q4(0Al), A_Q4(1Al), A_Q4(2Al), A_Q4(3Al), and A_Q4(4Al) is defined as A_total, the SAR can be determined according to the following.

SAR = 100/[A_Q4(1Al)/4 + 2 $\times$ A_Q4(2Al)/4 + 3 $\times$ A_Q4(3Al)/4 + 4 $\times$ A_Q4(4Al)/4] $\times$ 2

[Embrittlement resistance evaluation of zeolite formed body under $CO_2$ atmosphere]

Embrittlement resistance evaluation of a zeolite formed body obtained in each of Examples and Comparative Examples, under a $CO_2$ atmosphere, was performed according to the following procedure.

(1) 100 g of the zeolite formed body was weighed, the shorter diameter of the zeolite formed body was measured, and the average value of the shorter diameter of the zeolite formed body was defined as ds. A sieve having an aperture being smaller than ds and also having the largest aperture was selected and prepared from those having apertures published in JISZ 8801-1, the zeolite formed body was subjected to the sieve, and the remaining zeolite formed body on the sieve was adopted as a test sample for use in the embrittlement resistance evaluation under a $CO_2$ atmosphere.
(2) The test sample was dried under a $N_2$ atmosphere at 200°C for 3 hours. The test sample was cooled to room temperature under a $N_2$ atmosphere, and then exposed to $CO_2$ at room temperature for 30 minutes.
(3) The mass W1 of the test sample after exposure to $CO_2$ was measured, and then subjected to the sieve having the aperture, and the mass W2 of the zeolite formed body passing through the sieve was measured. The value calculated by the expression (1) was defined as the powdering rate [% by mass] of the zeolite formed body, and a zeolite formed body lower in powdering rate was evaluated to be a formed body having embrittlement resistance under a $CO_2$ atmosphere.

$$\text{Powdering rate [\% by mass]} = \frac{W2\ [g]}{W1\ [g]} \times 100 \quad \cdots \quad \text{Expression (1)}$$

[Contents of alkali metals]

Each zeolite was thermally dissolved in an aqueous sodium hydroxide solution or aqua regia, and appropriately diluted to provide a liquid, and the liquid was used to measure the concentrations of aluminum and potassium in the zeolite by ICP-emission spectrochemical analysis (hereinafter, also referred to as "ICP-AES", system name: SPS3520UV-DD, manufactured by Hitachi High-Tech Science Corporation). The contents of potassium and lithium in the zeolite were calculated in terms of the ratio (Z/T) of the total value (Z) of the amount of substance of potassium and lithium to the total value (T) of the amount of substance of alkali metals in the zeolite. The K/T was also calculated in the same manner.

[Amount of adsorption of $CO_2$ and amount of hysteresis; Gas adsorption-desorption isotherm measurement]

Gas adsorption-desorption isotherm measurement was performed according to the following procedure.

(1) A zeolite formed body (dried product after treatment at 350°C for 24 hours) obtained in each of Examples and Comparative Examples was used as a sample, and 0.2 g thereof was placed in a 12-mm cell (manufactured by Micromeritics Instrument Corporation).
(2) The sample placed in the cell of (1) above was mounted in a gas adsorption measuring system "3-Flex" (trade name) manufactured by Micromeritics Instrument Corporation, and subjected to a degassing treatment with heating under vacuum at 250°C and 0.001 mmHg or less for 12 hours.

(3) The sample placed in the cell after the treatment in (2) above was placed in constant-temperature circulating water at 25°C, and, after the sample temperature reached $25 \pm 0.2$°C, measurement with liquefied carbon dioxide gas (produced by Sumitomo Seika Chemicals Co., Ltd., purity: 99.9% by mass or more) was conducted with the absolute pressure being 0.25 up to 760 mmHg. Here, the pressure was measured over time during the measurement, and it was determined that the amount of saturation adsorption was achieved when the pressure variation reached 0.001%/10 sec or less, and the amount of saturation adsorption was defined as the amount of adsorption of $CO_2$ (unit: $cm^3/g$) at 25°C.

(4) Following the measurement of (3) above, the pressure was reduced over time from an absolute pressure of 760 to 0.25 mmHg, and desorption isotherm measurement of carbon dioxide was performed. For determination of equilibrium, measurement was performed in the same manner as (3) at a pressure variation of 0.001%/10 sec or less.

(5) The index representing the amount of hysteresis in an adsorption-desorption isotherm of carbon dioxide was as follows: when the amount of equilibrium adsorption at 75 mmHg in the adsorption isotherm measured in (3) and the amount of equilibrium adsorption at 75 mmHg in the desorption isotherm measured in (4) were respectively defined as q(Ad) and q(De), q(Ad)/q(De) was defined as the index representing the amount of hysteresis. A case of q(Ad)/q(De) = 1.00 indicates no hysteresis, and a smaller q(Ad)/q(De) indicates a state of a larger hysteresis.

[Amount of adsorption of $CH_4$; Gas adsorption isotherm measurement]

Gas adsorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).

(2) The sample placed in the cell of (1) above was mounted in a gas adsorption measuring system "3-Flex" (trade name) manufactured by Micromeritics Instrument Corporation, and subjected to a degassing treatment with heating under vacuum at 250°C and 0.001 mmHg or less for 12 hours.

(3) The sample placed in the cell after the treatment in (2) above was placed in constant-temperature circulating water at 25°C, and, after the sample temperature reached $25 \pm 0.2$°C, measurement with methane gas (produced by Fujii Shoji Co., Ltd., purity: 99.99% by mass or more) was conducted with the absolute pressure being 0.25 up to 760 mmHg. Here, the pressure was measured over time during the measurement and it was determined that the amount of saturation adsorption was achieved when the pressure variation reached 0.001%/10 sec or less, and the amount of saturation adsorption was defined as the amount of adsorption of $CH_4$ (unit: $cm^3/g$) at 25°C.

[Example 1]

After 61.93 g of water, 0.202 g of sodium hydroxide (NaOH, produced by FUJIFILM Wako Pure Chemical Corporation), 3.39 g of sodium nitrate ($NaNO_3$, produced by FUJIFILM Wako Pure Chemical Corporation), 1.64 g of sodium aluminate ($NaAlO_2$, produced by FUJIFILM Wako Pure Chemical Corporation) and 5.41 g of colloidal silica (Ludox AS-40, solid concentration: 40% by mass, produced by W. R. Grace & Co.-Conn.) were mixed, and stirred for 24 hours, 5.41 g of colloidal silica (Ludox AS-40, solid concentration: 40% by mass, produced by W. R. Grace & Co.-Conn.) was added thereto, and stirred for 30 minutes, thereby preparing a mixed gel. The composition of the mixed gel was as follows: $\alpha = (L1_2O + L2O)/SiO_2 = 0.00$, $\beta = OH^-/(M1_2O + M2O) = 0.14$, $\gamma = SiO_2/Al_2O_3 = 8.17$, $\delta = H_2O/Al_2O_3 = 431.0$, $\epsilon = P_2O_5/Al_2O_3 = 0.00$, $\xi = R/Al_2O_3 = 0.00$, and $\psi = S1/S2 = 0.50$. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 135°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

The silica/alumina ratio was calculated from a $^{29}Si$-MAS-NMR spectrum of the resulting zeolite, and as a result, SAR was 6.92 and (a + d)/(b + c) = 0.305 was satisfied. The contents of potassium and lithium in the zeolite satisfied Z/T = 0.00 (= K/T). The above measurement of X-ray diffraction was performed, and as a result, $P_{CO2}$ was 28.84, $P_{de}$ was 28.86, and $P_{CO2}/P_{de}$ was 1.00.

40 parts by mass of the GIS-type zeolite obtained by synthesis, 1.2 parts by mass of methyl cellulose (Serander YB-132A produced by HighChem Co., Ltd.), 0.2 parts by mass of polyvinyl alcohol (Gohsenol N-300 produced by Mitsubishi Chemical Corporation), 10.4 parts by mass of powder alumina hydrate (produced by JGC Catalysts and Chemicals Ltd., content rate of alumina: 70% by mass), and 48.2 parts by mass of alumina sol (produced by Nissan Chemical Corporation, content rate of alumina: 10.5% by mass) were mixed.

The mixture was manually extruded with a clay gun, into a cylindrical form having a diameter of 3 mm, and then calcined by use of an electric furnace at 350°C for 24 hours under an air atmosphere. The powdering rate of the GIS-type zeolite formed body thus obtained was 0.1%.

The desorption isotherm of $CO_2$ into the resulting GIS-type zeolite formed body was measured, thus the amount of adsorption at 760 mmHg was 59.6 $cm^3$/g and q(Ad)/q(De) was 1.000. The adsorption isotherm of $CH_4$ was measured in the same manner, and thus the amount of adsorption at 760 mmHg was 3.2 $cm^3$/g.

[Example 2]

After 61.65 g of water, 0.30 g of an aqueous 48% by mass sodium hydroxide solution (NaOH, produced by Tokuyama Corporation), 2.27 g of sodium carbonate ($Na_2CO_3$, produced by Tokuyama Corporation), 1.64 g of sodium aluminate ($NaAlO_2$, produced by Hokuriku Kasei Industry Co., Ltd.) and 0.82 g of colloidal silica (Ludox AS-40, solid concentration: 40% by mass, produced by W. R. Grace & Co.-Conn.) were mixed, and stirred for 30 minutes, 10.00 g of colloidal silica (Ludox AS-40, solid concentration: 40% by mass, produced by W. R. Grace & Co.-Conn.) was added thereto, and stirred for 30 minutes, thereby preparing a mixed gel. The composition of the mixed gel was as follows: $\alpha$ = (L1$_2$O + L2O)/$SiO_2$ = 0.00, $\beta$ = OH$^-$/(M1$_2$O + M2O) = 0.10, $\gamma$ = Si0$_2$/$Al_2O_3$=8.17, $\delta$ = $H_2O$/$Al_2O_3$=431.2, $\epsilon$ = $P_2O_5$/$Al_2O_3$ = 0.00, $\xi$ = R/$Al_2O_3$ = 0.00, and $\psi$=S1/S2 = 0.082. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.05 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

Each value was determined in the same manner as in Example 1, and thus SAR was 7.20 and (a + d)/(b + c) = 0.244 was satisfied by the $^{29}$Si-MAS-NMR spectrum. The contents of potassium and lithium in the zeolite satisfied Z/T = 0.98 (= K/T). The above measurement of X-ray diffraction was performed, and as a result, P$_{CO2}$ was 29.02, P$_{de}$ was 29.12, and P$_{CO2}$/P$_{de}$ was 0.997.

After the same molding as in Example 1, the powdering rate of the resulting GIS-type zeolite formed body was measured and thus was 0.9%, and the desorption isotherm of $CO_2$ was measured and thus the amount of adsorption at 760 mmHg was 61.0 $cm^3$/g and q(Ad)/q(De) was 1.000. The adsorption isotherm of $CH_4$ was measured in the same manner, and thus the amount of adsorption at 760 mmHg was 0.1 $cm^3$/g.

[Example 3]

After 141.41 g of water, 8.53 g of sodium nitrate ($NaNO_3$, produced by FUJIFILM Wako Pure Chemical Corporation), 3.85 g of sodium aluminate ($NaAlO_2$, produced by FUJIFILM Wako Pure Chemical Corporation) and 15.67 g of precipitated silica (Perkasil SM500, produced by W. R. Grace & Co.-Conn.) were mixed, and stirred for 60 minutes, 1.74 g of precipitated silica (Perkasil SM500, produced by W. R. Grace & Co.-Conn.) was added thereto, and stirred for 15 minutes, thereby preparing a mixed gel. The composition of the mixed gel was as follows: $\alpha$ = (L1$_2$O + L2O)/$SiO_2$ = 0.00, $\beta$ = OH$^-$/(M1$_2$O + M2O) = 0.00, $\gamma$ = $SiO_2$/$Al_2O_3$ = 14.00, $\delta$ = $H_2O$/$Al_2O_3$ = 379.3, $\epsilon$ = $P_2O_5$/$Al_2O_3$ = 0.00, $\xi$ = R/$Al_2O_3$ = 0.00, and $\Psi$ = S1/S2 = 0.90. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

Each value was determined in the same manner as in Example 1, thus SAR = 10.40 and (a + d)/(b + c) = 0.192 were satisfied according to the $^{29}$Si-MAS-NMR spectrum. The contents of potassium and lithium in the zeolite satisfied Z/T = 0.00 (= K/T). The above measurement of X-ray diffraction was performed, and as a result, P$_{CO2}$ was 28.60, P$_{de}$ was 29.51, and P$_{CO2}$/P$_{de}$ was 0.969.

After the same molding as in Example 1, the powdering rate of the resulting GIS-type zeolite formed body was measured and thus was 1.4%, and the desorption isotherm of $CO_2$ was measured and thus the amount of adsorption at 760 mmHg was 58.0 $cm^3$/g and q(Ad)/q(De) was 1.000. The adsorption isotherm of $CH_4$ was measured in the same manner, and thus the amount of adsorption at 760 mmHg was 4.1 $cm^3$/g.

[Comparative Example 1]

143.10 g of water, 40.00 g of an aqueous 50% sodium hydroxide solution (NaOH, solid concentration: 50% by mass, produced by Sigma-Aldrich), 2.70 g of an aluminum powder (Al, produced by FUJIFILM Wako Pure Chemical Corporation), and 75.10 g of colloidal silica (Ludox HS-40, solid concentration: 40% by mass, produced by Sigma-Aldrich) were mixed, and stirred for 24 hours, thereby preparing a mixed gel, based on the content of Non-Patent Literature 1. The composition of the mixed gel was as follows: $\alpha = (L_2O + L2O)/SiO_2 = 0.00$, $\beta = OH^-/(M1_2O + M2O) = 1.00$, $\gamma = SiO_2/Al_2O_3 = 10.00$, $\delta = H_2O/Al_2O_3 = 220.0$, $\varepsilon = P_2O_5/Al_2O_3 = 0.00$, and $\xi = R/Al_2O_3 = 0.00$. The mixed gel was loaded to a 300-mL stainless micro-bomb (manufactured by HIRO COMPANY) with a fluororesin inner cylinder placed, and subjected to hydrothermal synthesis at a stirring speed of 60 rpm at 150°C for 3 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica/alumina and the like, and therefore the resulting zeolite was evaluated to be a high-purity GIS-type zeolite.

Each value was determined in the same manner as in Example 1, thus SAR = 6.00 and $(a + d)/(b + c) = 0.176$ were satisfied according to the $^{29}$Si-MAS-NMR spectrum. The contents of potassium and lithium in the zeolite satisfied Z/T = 0.00 (= K/T). The above measurement of X-ray diffraction was performed, and as a result, $P_{CO2}$ was 34.04, $P_{de}$ was 28.05, and $P_{de}/P_{CO2}$ was 0.824. The adsorption isotherm of $CH_4$ was measured in the same manner, and thus the amount of adsorption at 760 mmHg was 7.3 cm$^3$/g.

After the same molding as in Example 1, the powdering rate of the resulting GIS-type zeolite formed body was measured and thus was 52%, and the desorption isotherm of $CO_2$ was measured and thus q(Ad)/q(De) was 0.365.

[Comparative Example 2]

207.30 g of water, 8.78 g of sodium hydroxide, 16.4 g of sodium aluminate and 248.3 g of liquid glass No. 3 were mixed, and stirred for 15 minutes, thereby preparing a mixed gel, based on the content of Patent Literature 1. The composition of the mixed gel was as follows: $\alpha = (L1_2O + L2O)/SiO_2 = 0.32$, $\beta = OH^-/(M1_2O + M2O) = 0.35$, $\gamma = SiO_2/Al_2O_3 = 12.40$, $\delta = H_2O/Al_2O_3 = 197.9$, $\varepsilon = P_2O_5/Al_2O_3 = 0.00$, and $\xi = R/Al_2O_3 = 0.00$. The mixed gel was loaded to a 1000-mL stainless autoclave with a fluororesin inner cylinder placed, and was subjected to hydrothermal synthesis at 130°C for 5 days without stirring, a product was subjected to filtration and dried at 120°C, and thereafter a powdered zeolite was obtained. Furthermore, there were not observed any peaks derived from other zeolite, amorphous silica/alumina and the like, and therefore the resulting zeolite was evaluated to be a high-purity GIS-type zeolite.

Each value was determined in the same manner as in Example 1, thus SAR = 4.10 and $(a + d)/(b + c) = 0.151$ were satisfied according to the $^{29}$Si-MAS-NMR spectrum. The contents of potassium and lithium in the zeolite satisfied Z/T = 0.00 (= K/T). The above measurement of X-ray diffraction was performed, and as a result, $P_{CO2}$ was 28.05, $P_{de}$ was 29.55, and $P_{CO2}/P_{de}$ was 0.949.

After the same molding as in Example 1, the powdering rate of the resulting GIS-type zeolite formed body was measured and thus was 39%, and the desorption isotherm of $CO_2$ was measured and thus the amount of adsorption at 760 mmHg was 37.8 cm$^3$/g and q(Ad)/q(De) was 0.365. The adsorption isotherm of $CH_4$ was measured in the same manner, and thus the amount of adsorption at 760 mmHg was 8.0 cm$^3$/g.

Industrial Applicability

The GIS-type zeolite according to the present invention has industrial applicability to adsorbents of carbon dioxide.

Reference Signs List

1    adsorption system
2    container
3    filter
4    zeolite formed body

Claims

1. A GIS-type zeolite wherein a diffraction angle ($2\theta$) is 28.60 to 29.54°, and the diffraction angle is a diffraction angle ($2\theta$) of a diffraction peak $P_{CO2}$ having a strongest intensity among diffraction peaks observed between diffraction angles $2\theta$ of 25.81 to 34.57° in a spectrum obtained by X-ray diffraction under a dehydrated state and a carbon dioxide adsorption condition.

2. A GIS-type zeolite wherein $P_{CO2}/P_{de} \geq 0.969$ is satisfied when a diffraction peak $P_{de}$ is a peak having a strongest intensity observed between diffraction angles $2\theta$ of 25.81 to 34.57° in a spectrum obtained by X-ray diffraction under a dehydrated state and a nitrogen adsorption condition.

3. The GIS-type zeolite according to claim 1, wherein $P_{CO2}/P_{de} \geq 0.969$ is satisfied when a diffraction peak $P_{de}$ is a peak having a strongest intensity observed between diffraction angles $2\theta$ of 25.81 to 34.57° in a spectrum obtained by X-ray diffraction under a dehydrated state and a nitrogen adsorption condition.

4. The GIS-type zeolite according to any one of claims 1 to 3, wherein the GIS-type zeolite has a silica/alumina ratio of 3.40 or more.

5. The GIS-type zeolite according to any one of claims 1 to 3, comprising potassium or lithium as cationic species in the GIS-type zeolite.

6. The GIS-type zeolite according to claim 5, wherein a ratio (Z/T) of a total value (Z) of amount of substance of potassium and lithium to a total value (T) of amount of substance of alkali metals in the GIS-type zeolite is 0.05 or more.

7. The GIS-type zeolite according to any one of claims 1 to 3, wherein $(a + d)/(b + c) \geq 0.192$ is satisfied when area intensities of peaks assigned to Q4(3Al), Q4(2Al), Q4(1Al), and Q4(0Al) observed in a $^{29}$Si-MAS-NMR spectrum are respectively defined as a, b, c, and d.

8. The GIS-type zeolite according to any one of claims 1 to 3, having an carbon dioxide adsorption capacity of 10 cm$^3$/g or more.

9. A zeolite formed body comprising the GIS-type zeolite according to any one of claims 1 to 3.

10. The zeolite formed body according to claim 9, comprising a carrier.

11. The zeolite formed body according to claim 10, wherein the carrier comprises an inorganic binder and an organic binder.

12. The zeolite formed body according to claim 10, wherein a total content of the carrier is 1 to 99% by mass based on a total amount of 100% by mass of the zeolite formed body.

13. The zeolite formed body according to claim 9, having a cylindrical shape.

14. The zeolite formed body according to claim 13, having a length of 3 mm or more and 30 mm or less and a diameter of 1 mm or more and 30 mm or less.

15. An adsorption system comprising the zeolite formed body according to claim 9.

16. A method for producing a purified gas, comprising a separation step of separating one or more selected from the group consisting of $CO_2$, $H_2O$, He, Ne, $Cl_2$, $NH_3$, and HCl from a mixture including two or more gases selected from the group consisting of $H_2$, $N_2$, $O_2$, Ar, CO, and hydrocarbon, by use of the adsorption system according to claim 15.

17. The production method according to claim 16, wherein the gas separation is performed by a pressure swing-type adsorption-separation method, a temperature swing-type adsorption-separation method, or a pressure/temperature swing-type adsorption-separation method in the separation step.

Figure 1

Figure 2

# INTERNATIONAL SEARCH REPORT

International application No.

**PCT/JP2023/012681**

## A. CLASSIFICATION OF SUBJECT MATTER

*C01B 39/46*(2006.01)i; *B01D 53/04*(2006.01)i; *B01D 53/047*(2006.01)i; *B01D 53/26*(2006.01)i; *B01D 53/28*(2006.01)i; *B01J 20/18*(2006.01)i; *B01J 20/28*(2006.01)i; *B01J 20/34*(2006.01)i
FI:   C01B39/46; B01J20/18 A; B01D53/047; B01J20/28 Z; B01J20/34 E; B01J20/34 H; B01D53/04 220; B01D53/26 230; B01D53/28

According to International Patent Classification (IPC) or to both national classification and IPC

## B. FIELDS SEARCHED

Minimum documentation searched (classification system followed by classification symbols)

C01B33/20-39/54; B01D53/02-53/12; B01D53/26-53/28; B01J20/00-20/28; B01J20/30-20/34;C01B32/00-32/991

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII);JSTChina (JDreamIII)

## C. DOCUMENTS CONSIDERED TO BE RELEVANT

| Category* | Citation of document, with indication, where appropriate, of the relevant passages | Relevant to claim No. |
|---|---|---|
| A | WO 2019/202933 A1 (ASAHI KASEI KK) 24 October 2019 (2019-10-24)<br>entire text | 1-17 |
| A | JP 2021-109818 A (ASAHI KASEI KK) 02 August 2021 (2021-08-02)<br>entire text | 1-17 |
| A | JP 2020-203284 A (SEKISUI CHEM. CO., LTD.) 24 December 2020 (2020-12-24)<br>entire text | 1-17 |
| A | JP 2020-14978 A (ASAHI KASEI KK) 30 January 2020 (2020-01-30)<br>entire text | 1-17 |
| A | WO 2018/110559 A1 (ASAHI KASEI KK) 21 June 2018 (2018-06-21)<br>entire text | 1-17 |
| A | CN 105460953 A (CHINA PETROLEUM & CHEM. CORP.) 06 April 2016 (2016-04-06)<br>entire text | 1-17 |

☑ Further documents are listed in the continuation of Box C.       ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **02 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 501 850 A1

<table>
<tr><td colspan="2"><strong>INTERNATIONAL SEARCH REPORT</strong></td><td>International application No.<br><strong>PCT/JP2023/012681</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | KR 10-1444939 B1 (IAC. IN NAT. UNIV. CHUNGNAM) 30 September 2014 (2014-09-30)<br>entire text | 1-17 |

Form PCT/ISA/210 (second sheet) (January 2015)

24

| International application No. |
|---|
| **PCT/JP2023/012681** |

| Patent document cited in search report | | | Publication date (day/month/year) | Patent family member(s) | | | Publication date (day/month/year) |
|---|---|---|---|---|---|---|---|
| WO | 2019/202933 | A1 | 24 October 2019 | US entire text EP entire text CN | 2020-0223706 003712112 111051242 | A1 A1 A | |
| JP | 2021-109818 | A | 02 August 2021 | (Family: none) | | | |
| JP | 2020-203284 | A | 24 December 2020 | US entire text EP entire text CA | 2022-0040673 003858477 112689535 | A1 A1 A | |
| JP | 2020-14978 | A | 30 January 2020 | (Family: none) | | | |
| WO | 2018/110559 | A1 | 21 June 2018 | US entire text CN | 2019-0039045 108495813 | A1 A | |
| CN | 105460953 | A | 06 April 2016 | (Family: none) | | | |
| KR | 10-1444939 | B1 | 30 September 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019202933 A